# EUROPÄISCHE PATENTSCHRIFT

(11) **EP 2 042 015 B1**
(45) Veröffentlichungstag und Bekanntmachung des Hinweises auf die Patenterteilung: **25.08.2010**
(21) Anmeldenummer: 08015984.1
(22) Anmeldetag: 11.09.2008
(51) Int. Cl.: A01C 17/00

(54) **Zentrifugalstreuer**
Centrifugal spreader
Epandeur centrifuge

(30) Priorität: 29.09.2007 DE 102007046797
(43) Veröffentlichungstag der Anmeldung: 01.04.2009
(73) Patentinhaber: Amazonen-Werke H. Dreyer GmbH & Co. KG, 49205 Hasbergen (DE)
(72) Erfinder: Haverkamp, Frank, 49479 Ibbenbüren (DE)

(56) Entgegenhaltungen:
- EP-A- 0 347 643
- EP-A- 1 161 856
- DE-A1- 4 433 475

## Beschreibung

Die Erfindung betrifft einen Zentrifugalstreuer gemäß des Oberbegriffes des Patentanspruches 1.

Ein derartiger Zentrifugalstreuer ist durch die EP 07 02 889 B1 bekannt. Wenn der Zentrifugalstreuer für das Grenz- oder Randstreuen eingesetzt werden soll, wird in den Streufächer eine Einrichtung zum Grenz- oder Randstreuen eingebracht. Diese Grenz- oder Randstreueinrichtung weist aufrechte und jeweils einteilig ausgebildete Leitplatten zur einseitigen Reduzierung der Streubreiten und Änderung des Streubildes auf. Bei dieser bekannten Ausgestaltung ist sowohl der innere wie auch der äußere Bereich der Leitplatten aufgrund der Befestigung der Leitplatten in Langlöchern an jeweils drei Stellen in gewünschte Position verstellbar.

Durch die EP 11 61 856 B1 und die EP 0347 643 sind weitere Zentrifugalstreuer bekannt, bei den ebenfalls zum Grenz- und Randstreuen eine Einrichtung zum Grenz- oder Randstreuen in den von den Schleuderscheiben durch Abwerfen des auszubringenden Materials erzeugten Streufächer einbringbar. Diese Einrichtung zum Grenz- oder Randstreuen weist aufrechte und zweiteilig ausgestaltete Leitplatten zur einseitigen Reduzierung der Streubreite und Änderung des Streubildes auf. Hierbei können je nach Einstellung sowohl der innere wie auch der äußere Bereich der Leitplatten in unterschiedlichen Winkelstellungen zueinander eingestellt werden.

Die Ausgestaltungen der bekannten Einrichtungen zum Grenz-oder Randstreuen für die bekannten Zentrifugalstreuer sind relativ aufwendig.

Der Erfindung liegt die Aufgabe zugrunde, die Einrichtung zum Grenz- oder Randstreuen für Zentrifugalstreuer zu vereinfachen, sowie die Umlenkung der von der Schleuderscheibe abgeschleuderten Düngepartikel zu verbessern.

Diese Aufgabe wird erfindungsgemäß dadurch gelöst, dass zumindest der verstellbare und äußere Bereich der Leitplatten aus einem elastischen Kunststoff- und/oder Gummimaterial besteht, dass für den jeweiligen verstellbaren und äußeren Bereich der Leitplatten zusätzlich zu unterschiedlichen Winkelanstellungen durch dessen Verstellung unterschiedliche Krümmungsradien der Leitplatten erzeugbar sind. Infolge der Ausgestaltung der Leitplatten aus einem elastischen Kunststoff- oder Gummimaterial wird einerseits eine rationelle einfache Fertigung dieser Leitplatten, sowie sehr flexible und variantenreiche Einstellungsmöglichkeiten der Leitplatten ermöglicht. Aufgrund der flexiblen Ausgestaltung der Leitplatten aus einem elastischen Kunststoff oder Gummimaterial können die unterschiedlichen Winkeleinstellungen der Leitplatten sowie auch unterschiedliche Krümmungsradien der Leitplatten erzeugt werden. Weiterhin erfolgt ein weicheres Umlenken und Umleiten durch die flexiblen Kunststoff- oder Gummiplatten. Auch wird eine hohe Verschleißfestigkeit gewährleistet.

Um eine ausreichend variantenreiche Einstellungsmöglichkeiten für die verschiedenen Einsatzanforderungen beim Rand- und Grenzstreuen in einfacher Weise erfüllen zu können, ist vorgesehen, dass der äußere Bereich in variabler Weise einstellbar ist.

Eine einfache Ausgestaltung und Anordnung der Leitplatten der Einrichtung zum Grenz- oder Randstreuen lässt sich dadurch erreichen, dass die Leitplatten, bezogen auf ihre Längsrichtung, mit zumindest zwei beabstandet zueinander angeordneten Befestigungsmitteln an dem Rahmen der Einrichtung befestigt sind, dass das zumindest eine der Streuscheibe benachbarte Befestigungsmittel unverstellbar am Rahmen der Einrichtung angeordnet ist, dass das der Streuscheibe abgewandte Befestigungsmittel für die Leitplatten am Rahmen der Einrichtung verstellbar am Rahmen angeordnet ist, dass die Verstellbarkeit zumindest einiger der äußeren Befestigungsmittel für die Leitplatten am Rahmen zur Verstellung der äußeren Bereiche zumindest einiger Leitplatten derart ausgestaltet ist, dass der Abstand zwischen dem den äußeren Befestigungsmittel benachbarten Befestigungsmittel und dem äußeren Befestigungsmittel und der Krümmungsradius des äußeren Bereiches zumindest einiger Leitplatten aufgrund der Flexibilität der aus Kunststoff-oder Gummimaterial bestehenden Leitplatten veränderbar ist. Hierdurch können die Leitplatten in einfacher sowie jeweils in gewünschter Weise zur Erzielung des gewünschten Rand- oder Grenzstreubildes eingestellt werden.

Zur Befestigung der erfindungsgemäßen Leitplatten zur Schaffung des unveränderbaren Bereiches der Leitplatten in dem der Streuscheibe benachbarten Bereich ist vorgesehen, dass für den unveränderbaren Bereich der Leitplatte zumindest zwei beabstandet angeordnete Befestigungsmittel vorgesehen sind.

In einfacher Weise lässt sich die Einstellung der Leitplatte in einer Ausführungsform dadurch verwirklichen, dass der Abstand zwischen dem äußeren Befestigungsmittel und dem benachbarten Befestigungsmittel vergrößer- oder verkleinerbar ist.

Eine einfache Einstellung des Krümmungsradius der Leitplatten im äußeren Bereich lässt sich dadurch erreichen, dass der Krümmungsradius der Leitplatten im äußeren Bereich durch die Veränderung des Abstandes zwischen dem äußeren und dem diesen benachbarten Befestigungsmittel variierbar und/oder veränderbar ist.

Eine einfache Anordnung der Befestigungsmittel für die Leitplatte wird dadurch erreicht, dass die Befestigungsmittel in den Leitplatten in integrierter Weise angeordnet sind.

Um eine einfache Befestigung der Leitplatten in dem der Streuscheiben benachbarten Bereich zu erreichen, ist vorgesehen, dass das der Streuscheibe benachbarte Befestigungsmittel derart ausgebildet ist, dass ein der Streuscheibe benachbarter Bereich der Leitplatte über einen Teil seiner Länge unveränderbar am Rahmen angeordnet ist.

Gemäß Anspruch 10 wird Elementenschutz für die in den Streufächer zum Grenz- und Randstreuen einbringbaren Einrichtung beansprucht.

Weitere Einzelheiten der Erfindung sind den übrigen Unteransprüchen, der Beispielsbeschreibung und den Zeichnungen zu entnehmen. Hierbei zeigen
- Fig. 1: eine Draufsicht auf eine Streuscheibe eines Zweischeibenstreuers mit der Grenzstreueinrichtung in einer Betriebsstellung in Prinzipdarstellung,
- Fig. 2: die Grenzstreueinrichtung in vergrößertem Maßstab in Teildarstellung und in der Draufsicht,
- Fig. 3: eine Leitplatte der Grenzstreueinrichtung in perspektivischer Darstellung,
- Fig. 4: die Leitplatte gemäß Fig. 3 in Röntgendarstellung,
- Fig. 5: eine Draufsicht auf eine Streuscheibe eines Zweischeibenstreuers mit einer weiteren Grenzstreueinrichtung in Betriebsstellung und in Prinzipdarstellung und
- Fig. 6: die Grenzstreueinrichtung gemäß Fig. 5 in der Draufsicht, in Teilansicht und vergrößertem Maßstab.

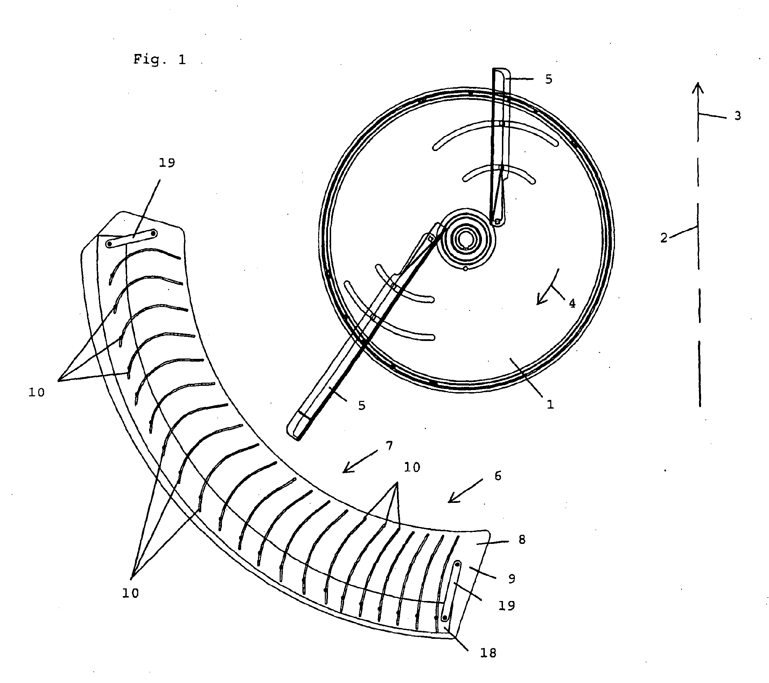

Die Fig. 1 zeigt die linke von zwei Streuscheiben 1 eines nicht näher dargestellten Zweischeibenstreuers, aus dessen Vorratsbehälter das Streugut in einstellbarer Menge auf die Streuscheiben 1 aufgegeben wird. Die Mitte des Streuers ist durch die strichpunktierte Linie 2 und die Fahrtrichtung durch den Richtungspfeil 3 angedeutet. Die beiden Streuscheiben 1 laufen gegensinnig und an den einander zugekehrten Seiten entgegen der Fahrtrichtung 3 in rotierender Weise um, wie diese durch den Pfeil 4 angedeutet ist. Die Streuschaufeln 5 auf der Schleuderscheibe 1 sind mittels bekannter Einstellmittel in unterschiedlichen Winkeleinstellungen einstellbar, um den Schleuderdüngerstreuer an unterschiedliche Arbeitsbreiten und den Streueigenschaften der verschiedenen auszubringenden Streumittel anpassen zu können.

Die beiden Streuscheiben 1 erzeugen durch das Abschleudern der Düngerpartikel über die Streuschaufeln 4 des aus dem Behälter dosiert ausgegebenen Streugutes einander überlappende Streufächer.

Der linken Streuscheibe 1 ist eine Einrichtung 6 zum Grenz-und/oder Randstreuen zugeordnet, die an ihrer Eingangsseite 7 zumindest annähernd konzentrisch zur Streuscheibe 1 verläuft.

Diese Einrichtung 6 weist einen von zwei beabstandet voneinander angeordnete und von Querstreben miteinander verbundenen obere 8 und untere Halteplatten gebildeten Rahmen auf. Zwischen den oberen 8 und unteren Rahmenplatten des Rahmens 9 sind in Drehrichtung der Schleuderscheibe 4 gesehen beabstandet zueinander angeordnete Leitplatten 10 angeordnet, die mit unterschiedlicher Krümmung und Winkelanstellung zur Flugrichtung der abgeschleuderten Streugutpartikel angeordnet sind. Mittels der aufrechten und einteilig ausgebildeten Leitplatten 10 der in den Streufächer eingeschwenkten Einrichtung 6 zum Grenz- und/oder Randstreuen wird eine einseitige Reduzierung der Streubreite und Änderung des Streubildes erreicht.

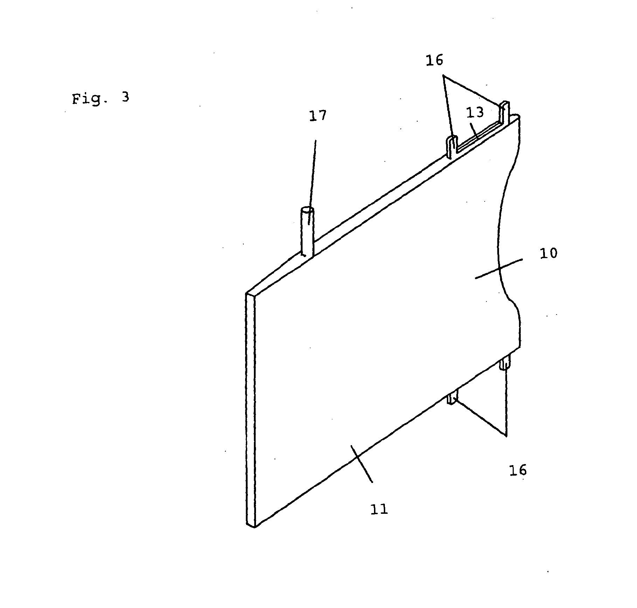

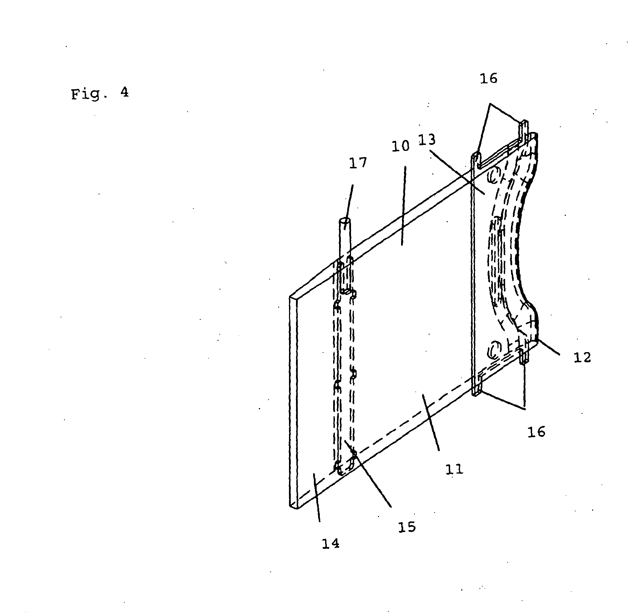

Die Leitplatten 10 sind aus einem elastischen Kunststoff-und/oder Gummimaterial hergestellt. Sie bestehen, wie die Fig. 3 und 4 zeigt, aus einer elastischen Kunststoff- und Gummimaterialplatte 11, wobei auf der inneren Seite 12 eine sich über einen längeren Breitenbereich erstreckende Halterungsplatte 13 und auf der äußerer Seite 14 ein Halterungsstab 15 in der Platte 11 angeordnet sind. Somit sind die Befestigungsmittel 13,15 in den Leitplatten 10 in integrierter Weise angeordnet. Der innere, d.h. der Schleuderscheibe 1 benachbarten Befestigungsplatte 13 sind zwei beabstandet zueinander angeordnete Befestigungsmittel 16 auf der Ober- und Unterseite zugeordnet, über welche die Leitplatte 10 in ihrem der Schleuderscheibe 1 zugewandten inneren Bereich über einem Teil ihrer Länge unveränderbar am Rahmen 9 der Grenz- und Randstreueinrichtung 6 in festgelegter Weise angeordnet ist. Das Befestigungselement 15, welches im äußeren, der Streuscheibe abgewandten Teil 14 angeordnet ist, ist mittels des Befestigungsmittels 17 an einem Verstellelement 18, welches mittels Parallelogrammlenkern 19 am Rahmen 9 angeordnet ist am Rahmen 9, angeordnet. Dieses Verstellelement 18 ist als längliche Platte ausgebildet und weist Aufnahmen für das äußere, der Schleuderscheibe 1 abgewandete Befestigungselement 16 der jeweiligen Leitplatte auf. Durch Verstellen bzw. Verschieben des Verstellelementes 18, an dem alle Befestigungselemente 15, 17 aller Leitplatten 10 angeordnet sind, werden alle Leitplatten 10 in ihrem äußeren Bereich gemeinsam verstellt. Zur Fixierung der jeweiligen Einstellung sind nicht dargestellte Befestigungs- oder Rast-, oder Fixierungselemente vorgesehen, die das Verstellelement 18 gegenüber dem Rahmen 9 und somit die Einstellung der Leitplatten 10 festlegen. In der oberen Platte 8 des Rahmens 9 sind Aussparungen, durch die Befestigungselemente 17 ragen und in denen sie verstellbar sind, angeordnet.

Die Leitplatten 10, sind wie erwähnt, bezogen auf ihre Längsrichtung mit den beiden beabstandet zueinander angeordneten Befestigungsmitteln 16, nämlich der Streuscheibe 1 benachbarten Befestigungsplatte 13 und dem der Streuscheibe 1 abgewandeten Befestigungsmittel 15, 17 an den Ober- 8 bzw. Unterplatten des Rahmens 9 der Grenz- und Randstreueinrichtung 6 befestigt. Das der Streuscheibe 1 benachbarte Befestigungsmittel 13 ist unverstellbar am Rahmen 9 der Grenz- und/oder Randstreueinrichtung 1 angeordnet, so dass der der Streuscheibe 1 benachbarten Bereich in einem festen Winkel und Anstellung am Rahmen 9 unverstellbar angeordnet ist.

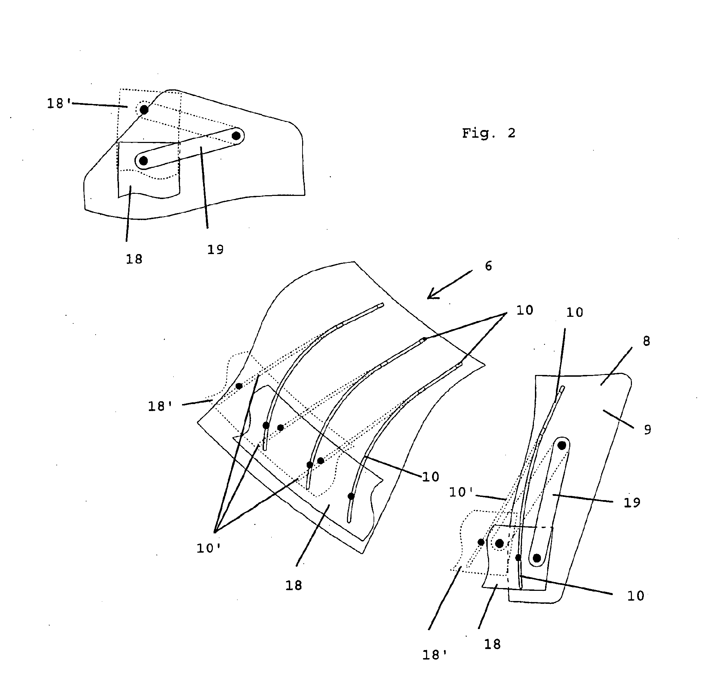

Das der Streuscheibe 1 abgewandte Befestigungsmittel 15, 17 ist über die Verstellplatte 18 verstellbar am Rahmen 9 angeordnet. Hierdurch ist die Verstellbarkeit der äußeren Befestigungsmittel 15, 17 für die Leitplatten 10 am Rahmen 9 zur Verstellung der äußeren Bereiche der Leitplatten 10 derart ausgestaltet, dass der Abstand zwischen den der Schleuderscheibe 1 benachbarten Befestigungsmittel 10, 16 und dem äußeren Befestigungsmittel 15, 17 und der Krümmungsradius der äußeren Bereiche zumindest einiger der Leitplatte 10 aufgrund der Flexibilität der aus Kunststoff- oder Gummimaterial bestehenden Leitplatten 10 zu verändern ist. Eine Einstellung des äußeren Bereiches der Leitplatten 10 ist in der Fig. 2 durch die mit durchzogenen Linien und eine veränderte Einstellung der Leiplatten 10 ist durch mit strichlierten Linien dargestellte Stellung der Leitplatten 10' und der Einstellmittel 18' angedeutet.

Um zu erreichen, dass der der Streuscheibe 1 benachbarte Bereich der Leitplatten 10 über einen gewissen Bereich, der etwa zumindest einem sechstel der Länge der Leitplatten 10 entspricht, unverstellbar auszugestalten, ist die Leitplatte 10 mit einem über den längeren Bereich ausgebildeten Befestigungsmitteln 13 oder mit, wie in Fig. 3 und 4 dargestellt ist, zwei beabstandete zueinander angeordnete Befestigungsmittel 16 am Rahmen 9 befestigt.

Durch die entsprechende Anlenkung der Verstellplatte 18 gegenüber dem Rahmen 1 der Grenz- und Randstreueinrichtung 6 ist der Abstand zwischen dem äußeren Befestigungsmittel 15 und dem der Streuscheibe 1 benachbarten Befestigungsmittel 13 vergrößer- und/oder verkleinerbar. Hierdurch kann der Krümmungsradius der Leitplatten 10 im äußeren Bereich der Leitplatten 10 durch die Veränderung des Abstandes zwischen dem äußeren und dem diesem benachbarten Befestigungsmittel variiert und/oder verändert werden, wie Fig. 2 zeigt.

Somit sind durch die Verstellung des verstellbaren äußeren Bereichs der Leitplatten 10 zusätzlich zu der unterschiedlichen Winkelanstellung durch dessen Verstellung auch unterschiedliche Krümmungsradien der Leitplatten 10 erzeugbar.

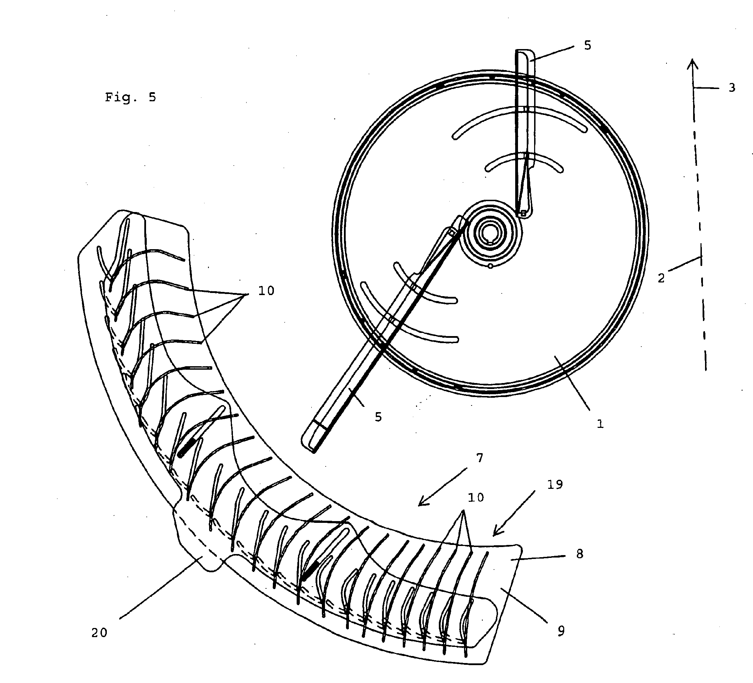

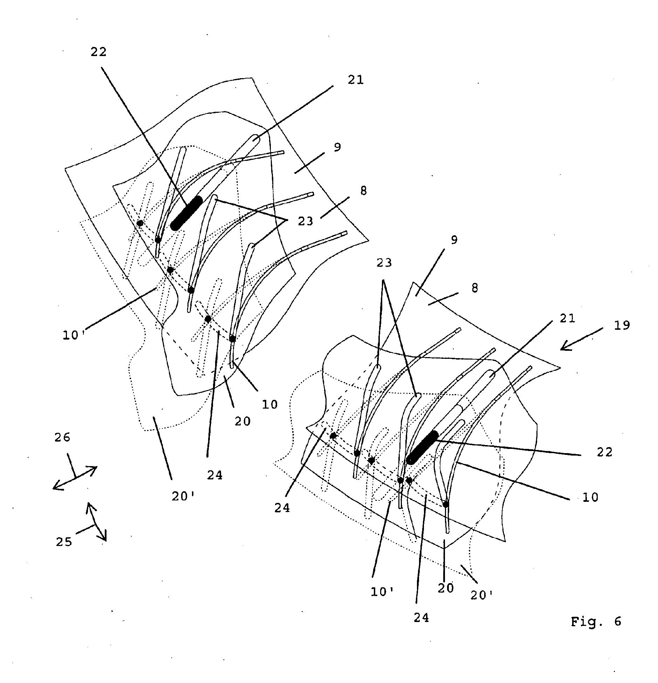

Die Rand- und Grenzstreueinrichtung 19 gemäß Fig. 5 und 6 unterscheidet sich von der Rand- und Grenzstreueinrichtung 6 gemäß den Fig. 1 bis 4 lediglich durch die andere Ausbildung des Verstellelementes 20. Dieses Verstellelement 20 ist als verschiebbare Verstellplatte ausgeführt und weist zwei beabstandet zueinander angeordnete Langlöcher 21 auf, die parallel zueinander angeordnet sind und über längliche Führungselemente 22, die an der oberen Platte 8 des Rahmens 9 der Einrichtung 19 befestigt sind, geführt ist. Des Weiteren sind in der Verstellplatte 20 bogenförmige Langlöcher 23 angeordnet. Weiterhin sind in der oberen Platte 8 des Rahmens 9 in Querrichtung zu den Langlöchern 23 die Langlöcher 24 angeordnet. In dem Kreuzungsbereich der Langlöcher 24 und 23 ragt jeweils der Befestigungsstift 17 des Befestigungselementes 15 der Leitplatten 10. Durch Verschieben der Verstellplatte 20 in Pfeilrichtung 25 bzw. 26 kann die gewünschte Einstellung der Leitplatten 10 erfolgen. Mit durchzogenen Linien ist sowohl das Einstellmittel 20 wie auch die Leitplatten 10 in einer ersten Position angestellt. Durch die mit strichpunktierten Linien angedeutete Position der Leitplatte 10' und des Stellelementes 20' ist eine andere Position der Leitplatten bzw. deren Einstellmöglichkeit angedeutet. Zwischen der Verstellplatte 20 und dem Rahmen 9 der Einrichtung 19 können nicht dargestellte Arretierungsmittel angeordnet sein.

## Patentansprüche

1. Zentrifugalstreuer, insbesondere Düngerstreuer, mit zumindest zwei um parallele Achsen gegensinnig umlaufende Streuscheiben (1), die das aus einem Behälter dosiert aufgegebene Streugut in einander überlappenden Streufächern abgeben, und mit einer wahlweise wenigstens einem der Streufächer einbringbaren Einrichtung (6) zum Grenz- und/oder Randstreuen mit aufrechten und jeweils einteilig ausgebildeten Leitplatten (10) zur einseitigen Reduzierung der Streubreite und Änderung des Streubildes, wobei zumindest der äußere Bereich der Leitplatten (10) in unterschiedlichen Winkelstellungen zu dem inneren Bereich der Leitplatten (10) einstellbar ist, **dadurch gekennzeichnet, dass** zumindest der verstellbare und äußere Bereich der Leitplatten (10) aus einem elastischen Kunststoff- und/oder Gummimaterial besteht, dass für den jeweiligen verstellbaren und äußeren Bereich der Leitplatten (10) zusätzlich zu unterschiedlichen Winkelanstellungen durch dessen Verstellung unterschiedliche Krümmungsradien der Leitplatten (10) erzeugbar sind.

2. Zentrifugaldüngerstreuer nach Anspruch 1, **dadurch gekennzeichnet, dass** der äußere Bereich der Leitplatten (10) in variabler Weise einstellbar ist.

3. Zentrifugaldüngerstreuer nach einem oder mehreren der vorstehenden Ansprüche, **dadurch gekennzeichnet, dass** die Leitplatten (10), bezogen auf ihre Längsrichtung, mit zumindest zwei beabstandet zueinander angeordneten Befestigungsmitteln (13,16,17) an dem Rahmen (9) der Einrichtung (6) befestigt sind, dass das zumindest eine der Streuscheibe (1) benachbarte Befestigungsmittel (13, 16) unverstellbar am Rahmen (9) der Einrichtung (6) angeordnet ist, dass das der Streuscheibe (1) abgewandte Befestigungsmittel (16,17) für die Leitplatten (10) am Rahmen (9) der Einrichtung (6) verstellbar am Rahmen (9) angeordnet ist, dass die Verstellbarkeit zumindest einiger der äußeren Befestigungsmittel (15,17) für die Leitplatten (10) am Rahmen (9) zur Verstellung der äußeren Bereiche zumindest einiger Leitplatten (10) derart ausgestaltet ist, dass der Abstand zwischen dem den äußeren Befestigungsmittel (13, 16) benachbarten Befestigungsmittel (15,17) und dem äußeren Befestigungsmittel (13,16) und der Krümmungsradius des äußeren Bereiche zumindest einiger Leitplatten (10) aufgrund der Flexibilität der aus Kunststoff- oder Gummimaterial bestehenden Leitplatten (10) veränderbar ist.

4. Zentrifugaldüngerstreuer nach Anspruch 3, **dadurch gekennzeichnet, dass** für den unveränderbaren Bereich der Leitplatte (10) zumindest zwei beabstandet angeordnete Befestigungsmittel (16) vorgesehen sind.

5. Zentrifugaldüngerstreuer nach Anspruch 3, **dadurch gekennzeichnet, dass** der Abstand zwischen dem äußeren Befestigungsmittel (13,16) und dem benachbarten Befestigungsmittel (15,17) vergrößer- oder verkleinerbar ist.

6. Zentrifugaldüngerstreuer nach einem oder mehreren der vorstehenden Ansprüche, **dadurch gekennzeichnet, dass** der Krümmungsradius der Leitplatten (10) im äußeren Bereich durch die Veränderung des Abstandes zwischen dem äußeren Befestigungsmittel (13,16) und dem diesen benachbarten Befestigungsmittel (15,17) variierbar und/oder veränderbar ist.

7. Zentrifugaldüngerstreuer nach einem oder mehreren der vorstehenden Ansprüche, **dadurch gekennzeichnet, dass** die Befestigungsmittel (13,15,16,17)in den Leitplatten (10) in integrierter Weise angeordnet sind.

8. Zentrifugaldüngerstreuer nach einem oder mehreren der vorstehenden Ansprüche, **dadurch gekennzeichnet, dass** das der Streuscheibe (1) benachbarte Befestigungsmittel (13,16) derart ausgebildet ist, dass ein der Streuscheibe (1) benachbarter Bereich der Leitplatte (10) über einen Teil seiner Länge unveränderbar am Rahmen (9) angeordnet ist.

9. Zentrifugaldüngerstreuer nach Anspruch 8, **dadurch gekennzeichnet, dass** der unveränderbare Teil der Länge zumindest einem sechstel der Länge der Leitplatte (10) beträgt.

## Claims

1. Centrifugal spreader, in particular a fertilizer spreader, having at least two spreading discs (1), which revolve in opposite directions about parallel axes and which deliver the spreading product, discharged in a metered manner from a tank, in mutually overlapping spreading fans, and having a boundary and/or edge spreading device (6), which can be introduced selectively to at least one of the spreading fans, having upright guide plates (10), which are respectively configured in one part, for the one-sided reduction of the spread width and alteration of the spread pattern, wherein at least the outer region of the guide plates (10) is adjustable into different angular settings with respect to the inner region of the guide plates (10), **characterized in that** at least the adjustable and outer region of the guide plates (10) consists of an elastic plastics and/or rubber material, **in that**, for the respective adjustable and outer region of the guide plates (10), in addition to different angular positionings, different radii of curvature of the guide plates (10) can be produced by adjustment of the said region.

2. Centrifugal fertilizer spreader according to Claim 1, **characterized in that** the outer region of the guide plates (10) is variably adjustable.

3. Centrifugal fertilizer spreader according to one or more of the preceding claims, **characterized in that** the guide plates (10), with respect to their longitudinal direction, are fastened to the frame (9) of the device (6) with at least two mutually spaced fastening means (13, 16, 17), **in that** the at least one fastening means (13, 16) adjacent to the spreading disc (1) is arranged non-adjustably on the frame (9) of the device (6), **in that** the fastening means (16, 17), facing away from the spreading disc (1), for fastening the guide plates (10) to the frame (9) of the device (6) is arranged adjustably on the frame (9), **in that** the adjustability of at least some of the outer fastening means (15, 17) for fastening the guide plates (10) to the frame (9) is configured for the adjustment of the outer regions of at least some guide plates (10) such that the distance between the fastening means (15, 17) adjacent to the outer fastening means (13, 16) and the outer fastening means (13, 16), and the radius of curvature of the outer region of at least some guide plates (10), is alterable due to the flexibility of the guide plates (10) consisting of plastics or rubber material.

4. Centrifugal fertilizer spreader according to Claim 3, **characterized in that**, for the unalterable region of the guide plate (10), at least two mutually spaced fastening means (16) are provided.

5. Centrifugal fertilizer spreader according to Claim 3, **characterized in that** the distance between the outer fastening means (13, 16) and the adjacent fastening means (15, 17) can be lengthened or shortened.

6. Centrifugal fertilizer spreader according to one or more of the preceding claims, **characterized in that** the radius of curvature of the guide plates (10) in the outer region is variable and/or alterable by alteration of the distance between the outer fastening means (13, 16) and the fastening means (15, 17) adjacent thereto.

7. Centrifugal fertilizer spreader according to one or more of the preceding claims, **characterized in that** the fastening means (13, 15, 16, 17) are arranged in an integrated manner in the guide plates (10).

8. Centrifugal fertilizer spreader according to one or more of the preceding claims, **characterized in that** the fastening means (13, 16) adjacent to the spreading disc (1) is configured such that a region of the guide plate (10) lying adjacent to the spreading disc (1) is arranged on the frame (9) such that it is unalterable over a part of its length.

9. Centrifugal fertilizer spreader according to Claim 8, **characterized in that** the unalterable part of the length amounts to at least one-sixth of the length of the guide plate (10).

## Revendications

1. Epandeur centrifuge, notamment épandeur d'engrais comportant au moins deux disques d'épandage (1) tournant en sens opposé autour d'axes parallèles, et distribuant du produit d'épandage fourni de manière dosée à partir d'un réservoir selon des éventails d'épandage qui se chevauchent, et
- une installation (6) qui peut s'introduire sélectivement dans au moins l'un des éventails d'épandage pour l'épandage en limite et/ou en bordure, avec une réduction unilatérale de la largeur d'épandage et modification de l'image d'épandage,
- au moins la zone extérieure des plaques de guidage (10) se réglant dans des positions angulaires différentes par rapport à la zone intérieure des plaques directrices (10),
**caractérisé en ce qu'**
- au moins la zone extérieure, réglable, des plaques directrices (10), est réalisée en une matière plastique élastique et/ou en une matière caoutchouteuse,
- pour la zone respectivement extérieure et réglable des plaques directrices (10), le réglage permet d'avoir des rayons de courbure différents pour les plaques directrices (10) en plus des réglages angulaires différents.

2. Epandeur centrifuge d'engrais selon la revendication 1,
**caractérisé en ce que**
la zone extérieure des plaques directrices (10) est réglable de manière invariable.

3. Epandeur centrifuge d'engrais selon l'une des revendications précédentes,
**caractérisé en ce que**
rapportées à leur direction longitudinale, les plaques directrices (10) sont fixées au châssis (9) de l'installation (6) par au moins deux moyens de fixation (13, 16, 17) écartés l'un de l'autre,
- au moins l'un des disques d'épandage (1) est installé par des moyens de fixation voisins (13, 16) de manière non réglable au châssis (9) de l'installation (6),
- le moyen de fixation (16, 17) des plaques directrices (la), à l'opposé du disque d'épandage (1), est installé de manière réglable sur le châssis (9) par l'installation (6),
- la possibilité de réglage d'au moins certains des moyens de fixation extérieurs (15, 17) des plaques directrices (10) sur le châssis (9) est conçue pour régler les zones extérieures d'au moins certaines plaques directrices (10) de façon que la distance entre le moyen de fixation (15, 17) voisin du moyen de fixation extérieur (13, 16) et le moyen de fixation extérieur (13, 16) et le rayon de courbure des zones extérieures d'au moins certaines plaques directrices (10) puisse être modifiée par la souplesse des plaques directrices (10) en matière plastique ou en matière caoutchouteuse.

4. Epandeur centrifuge d'engrais selon la revendication 3,
**caractérisé par**
au moins deux moyens de fixation (16), écartés l'un de l'autre pour la zone variable de la plaque directrice (10).

5. Epandeur centrifuge d'engrais selon la revendication 3,
**caractérisé en ce que**
la distance entre le moyen de fixation extérieur (13, 16) et le moyen de fixation voisin (15, 17) peut être agrandie ou diminuée.

6. Epandeur centrifuge d'engrais selon l'une des revendications précédentes,
**caractérisé en ce que**
le rayon de courbure des plaques directrices (10) dans la zone extérieure, peut être varié et/ ou modifié par la variation de la distance entre le moyen de fixation extérieur (13, 16) et le moyen de fixation (15, 17) voisin de celui-ci.

7. Epandeur centrifuge d'engrais selon l'une des revendications précédentes,
**caractérisé en ce que**
les moyens de fixation (13, 15, 16, 17) sont intégrés aux plaques directrices (10).

8. Epandeur centrifuge d'engrais selon l'une des revendications précédentes,
**caractérisé en ce que**
le moyen de fixation (13, 16) voisin du disque d'épandage (1) est réalisé pour qu'une zone de la plaque directrice (10) voisine du disque d'épandage (1), soit montée de manière invariable sur le châssis (9) sur une partie de sa longueur.

9. Epandeur centrifuge d'engrais selon la revendication 8,
**caractérisé en ce que**
la partie invariable de la longueur représente au moins un sixième de la longueur de la plaque directrice (10).
